# FASCICULE DE BREVET EUROPEEN

(11) **EP 1 891 794 B1**
(45) Date de publication et mention de la délivrance du brevet: **02.09.2009**
(21) Numéro de dépôt: 06763666.2
(22) Date de dépôt: 13.06.2006
(51) Int. Cl.: H04L 29/08

(54) **MODIFICATION DU MODE DE SERVICE DEMANDE PAR UN TERMINAL DE COMMUNICATION**
ÄNDERUNG DES VON EINEM KOMMUNIKATIONSENDGERÄT ANGEFORDERTEN DIENSTMODUS
MODIFYING SERVICE MODE REQUESTED BY A COMMUNICATION TERMINAL

(30) Priorité: 13.06.2005 FR 0505972
(43) Date de publication de la demande: 27.02.2008
(73) Titulaire: FRANCE TELECOM, 75015 Paris (FR)
(72) Inventeur: AUVRAY, Vincent, 50460 Tonneville (FR); BEZIAU, Christophe, F-14320 Saint-Martin de Fontenay (FR); COLLOMB-PATTON, Bertrand, F-14220 Boulon (FR)
(74) Mandataire: Bioret, Ludovic
(86) Numéro de dépôt international: PCT/EP2006/063139
(87) Numéro de publication internationale: WO 2006/134102

(56) Documents cités:
- WO-A-02/05581
- WO-A-02/10943

## Description

### 1. Domaine de l'invention

Le domaine de l'invention est celui des télécommunications mobiles et de l'accès au travers d'un même terminal mobile à plusieurs types de contenus se présentant sous la forme de données multimédia, par exemple des données vidéo, texte, audio, etc., au moyen d'une interface de navigation déterminée.

Plus précisément, l'invention s'inscrit dans une problématique d'adaptation d'une telle interface de navigation en fonction du type et de la disponibilité du réseau de communication utilisé, à un instant donné.

En effet, la disponibilité en termes de bandes passantes des réseaux de communication permettant de supporter l'accès à des contenus multimédia mis à disposition par des terminaux serveurs de contenus distants, et la navigation dans les données multimédia mises à disposition par ces derniers, varient dans le temps, en fonction du nombre des terminaux mobiles qui leurs sont connectés simultanément.

En outre, chaque type de réseau de communication mobile propose respectivement de par sa nature, un débit :
- limité à 9.6 Kbit/s pour une communication en mode GSM DATA;
- limité entre 30 à 40 Kbit/s en réception et entre 10 à 20 Kbits/s en émission, pour une communication en mode GPRS ;
- pratiquement constant d'environ 250 Kbits/ pour une communication en mode UMTS/3G ;
- pouvant attendre plusieurs Mbit/s pour une communication en mode Wifi, selon la norme.

Ces débits de communication à l'occasion de transferts et d'échanges de données sur ces différents types de réseaux dé communication mobile varient pour certains selon la distance séparant le terminal mobile au relais GSM/GPRS/3G ou à la borne Wifi, suivant la qualité de la réception, ou bien encore suivant le type terminal mobile utilisé.

Ainsi, pour des raisons évidentes d'efficacité, d'économie et de disponibilité, il devient nécessaire de piloter les différents services disponibles au-dessus de ces couches de transport selon que l'on se trouve sur un réseau bas débit (GSM DATA) / moyen débit (GPRS) ou haut débit (UMTS/3G, Wifi) - en adaptant le mode adéquat de navigation : Wap, HTML allégé, HTML, etc., suivant qu'on cherche à accéder à des contenus multimédia plus ou moins riches, et suivant la connexion réseau accessible au terminal mobile - réseau GSM data, GPRS data, 3G, EDGE, UMTS, etc. par exemple.

Il est bien entendu que si l'invention peut s'appliquer au domaine des radio communication, elle peut s'appliquer aisément et de façon plus générale, au domaine des communications et de la diffusion, par exemple radio ou satellite. Elle peut donc s'appliquer à tout terminal de communication ne disposant que d'une seule interface de communication, laquelle peut s'adapter à la qualité d'un signal reçu à un instant donné.

### 2. État de la technique

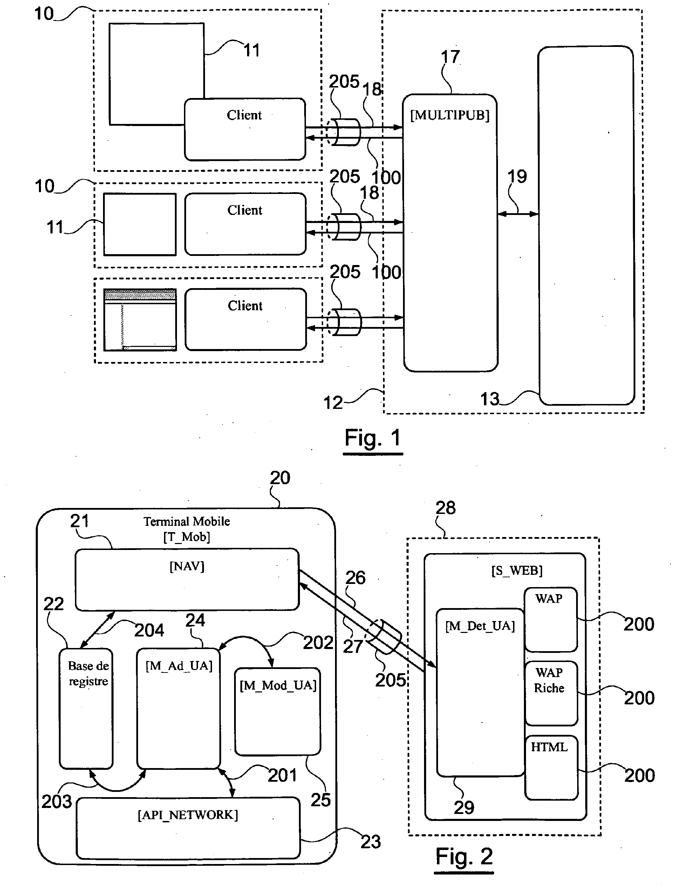

A l'heure actuelle, et comme illustré sur la figure 1, les systèmes de navigation Wap/Web sur terminaux (10) mobiles permettent à ces derniers de dialoguer au moyen d'une interface (11) de navigation et/ou de dialogue (par exemple un navigateur Web) avec un terminal (12) serveur distant, mettant à disposition divers contenus multimédia sous la forme d'un site (13) Web, par exemple, sans prendre en compte la nature de la couche physique réseau (205) - GSM DATA, GPRS, UMTS/3G, etc.- notamment en termes de débit.

A titre d'exemple illustratif, les terminaux (10, 11) mobiles relativement peu évolués utilisent le plus souvent une interface de navigation (que l'on dénommera de façon générale dans la suite du présent document navigateur) du type Wap, de façon à pourvoir accéder à, et à pouvoir naviguer dans le contenu des sites Wap dédiés.

Les contenus (13) publiés sur des terminaux (12) serveurs accessibles sur un réseau (205) de communication sont le plus souvent retravaillés au moyen d'outils (17) de multi publication qui permettent d'interfacer le terminal (10) mobile avec le terminal (12) serveur de contenu hébergeant un site (13) Web par exemple.

De tels outils (17) capturent les requêtes (18) transmises par le terminal (10) au terminal (12) serveur, extraient dans l'entête de ces dernières la valeur de l'identifiant d'interface de navigation (communément dénommé « User-Agent ») du terminal (10) mobile puis, en fonction cette valeur d'identifiant, adaptent (19) pour la réponse (100) une page HTML riche en contenu multimédia en une page de contenu adaptée à l'interface (11) de navigation du terminal (10) mobile.

Certains outils améliorés de multi publication peuvent également transformer les contenus mis à disposition par des terminaux serveurs, de manière automatique, selon des règles prédéfinies. D'autres utilisent des règles dédiées à un site hébergé par un serveur et redéfinissent page par page les données multimédia du site à transmettre au terminal mobile, en fonction de la taille d'écran et des capacités de l'interface de navigation de ce dernier.

Un inconvénient majeur de ces solutions d'adaptation d'un contenu multimédia hébergé par un serveur de contenu (un serveur Web, par exemple) concerne le fait que les terminaux mobiles de nouvelle génération disposent de capacité d'affichage et de traitement comparables à de véritables stations de navigation Internet.

Or les capacités des réseaux sans fils, principalement en termes de débit pour la transmission de données multimédia souvent volumineuses, par exemple un réseau GSM, GPRS, 3G, Wifi, dépendent le plus souvent de la localisation à un instant donné du terminal mobile.

Ainsi, des réseaux « haut débit » du type 3G ou Wifi, par exemple, disponibles en agglomération ne seront cependant pas disponibles à l'extérieur d'agglomération où ils seront relayés par des réseaux du type GSM / GPRS, lesquels disposent de capacité plus faible, notamment en termes de débit et/ou de bande passante.

Or, les contenus transmis par un serveur de contenu sont adaptés par ce dernier à l'interface de navigation embarquée par le terminal.

Ainsi, les contenus transmis à un terminal mobile 3G s'appuyant pour ses communications et/ou sa navigation Internet sur un réseau 3G, pourront être relativement volumineux, sans altération notable de la qualité de service rendue à l'utilisateur du terminal mobile.

En revanche, un même contenu sera réadapté avant transmission s'il est destiné à un terminal mobile 2G disposant uniquement de capacités d'accès à des réseaux proposant des débits en réception et en émission plus faibles.

Un autre inconvénient des techniques connues de l'art antérieur est lié au fait que lorsqu'un terminal mobile évolué, du type 3G par exemple, se déplace et passe d'une couverture réseau du type 3G (par exemple) à une couverture réseau de capacité plus faible, GSM par exemple, alors que son utilisateur interroge le contenu multimédia d'un site Web hébergé par un serveur de contenus, le contenu qui lui est renvoyé suite à ses différentes requêtes ne sera pas réadapté, le serveur continuant à lui transmettre le contenu requis, de façon adaptée pour un terminal 3G connecté à un réseau 3G, et non pas à un terminal mobile 3G connecté à un réseau de plus faible capacité.

La conséquence concerne ainsi une diminution sensible de la qualité de service offerte à l'utilisateur du terminal mobile. A titre d'exemple illustratif d'une telle conséquence, une navigation à « bas débit » au travers un réseau du type GSM Data, seul disponible et/ou accessible sur une période donnée, avec un terminal mobile de nouvelle génération pourra se révéler aussi chaotique que l'utilisation d'un modem d'il y a 10ans avec un ordinateur de bureau. ,

Selon une technique connue, décrite dans le document WO 02/10943, un dispositif de mesure de la bande passante disponible entre une application cliente et une application serveur est présenter pour la sélection ou l'adaptation d'un niveau de résolution de données à afficher, de façon à assurer auprès de l'utilisateur un niveau constant de rendu d'affichage.

Selon une autre technique connue, décrite dans le document WO 02/05581, un système permettant d'adapter le format d'un contenu d'information reçu au travers d'un réseau de communication depuis un serveur de contenus est présenté, de façon à le restituer le contenu sur un terminal client tout en tenant compte de la capacité de la passerelle d'accès du terminal mobile utilisée à un instant donné.

### 3. Objectifs de l'invention

L'invention décrite ici propose de pallier les inconvénients des solutions techniques de l'art antérieur.

Un objectif de l'invention consiste donc à fournir une technique permettant d'adapter le comportement d'un terminal mobile en termes d'accès à un serveur de contenus, et de navigation sur des sites Web hébergés par un tel serveur de contenus, par exemple du type multimédia, en fonction de la capacité du réseau de communication disponible.

Un autre objectif de l'invention consiste donc à permettre à un utilisateur d'un terminal mobile de recevoir des contenus plus ou moins volumineux selon qu'il dispose d'une « bonne » ou d'une « mauvaise » connexion réseau en fonction de sa localisation géographique donnée, ou encore, en fonction de l'évolution de cette dernière impliquée par le déplacement de l'utilisateur du terminal mobile.

Un objectif supplémentaire de l'invention consiste à fournir une technique qui soit la plus transparente possible pour l'utilisateur, tout en lui offrant un rendu du contenu requis auprès du serveur de contenus qui soit parfaitement adapté aux contraintes de disponibilité du réseau utilisé à un instant donné.

Un autre objectif de l'invention vise à fournir une telle technique qui permette de modifier automatiquement le format des contenus multimédia que le terminal mobile recevra suite à la transmission de chacune de ses requêtes à un serveur, en fonction de la nature de la couche de transport DATA qui sera disponible.

Encore un autre objectif de l'invention est de fournir une telle technique qui soit relativement simple de mise en oeuvre et de coût raisonnable.

Un dernier objectif de l'invention consiste à fournir une telle technique qui soit adaptable à tout type de terminaux mobiles communicants disposants de diverses capacité de navigation et d'affichage, et de diverses capacités d'accès réseau.

### 4. Résumé de l'invention

Ces objectifs, ainsi que d'autres qui apparaîtront par la suite, sont atteints selon l'invention à l'aide d'un procédé de modification du mode de service demandé par un terminal de communication et/ou de diffusion, le terminal étant connecté à un réseau de communication à qualité de service variable.
Selon un tel procédé, le terminal exécute avantageusement préalablement à la transmission d'au moins certaines de ses requêtes, au moins :
- une étape de sélection d'une nouvelle valeur d'identifiant du mode de service souhaité comprenant :
   ○ une sous-étape de remplacement de la valeur d'identifiant d'interface de navigation courante dudit terminal par une nouvelle valeur d'interface de navigation adaptée à ladite nouvelle valeur d'identifiant du mode de service :
- une étape d'intégration dans le contenu de la requête à transmettre, de la valeur d'identifiant dudit mode de service souhaité.
   Ainsi, les signaux requis par le terminal en réponse à chacune de ses requêtes sont adaptés au format correspondant à la valeur qu'elles contiennent.

Avantageusement, l'invention s'applique donc à tout type de services accessible au travers d'un terminal capable d'adapter son comportement et sa qualité de service offerte à l'utilisateur.

Par mode de service, on désigne le type de protocole utilisé par le terminal de radiocommunication lors d'une session de communication, par exemple, le protocole HTML, HTML allégé, Wap, etc., ou tout autre protocole de communication supporté. Ainsi, en fonction du protocole utilisé par le terminal, l'interface de navigation de ce dernier peut ensuite être aisément adaptée de façon à optimiser dynamiquement le rendu de l'affichage sur l'écran du terminal et ainsi offrir une meilleure qualité de service à l'utilisateur.

A titre de simple exemple illustratif et non limitatif, lorsque le mode de service WAP du terminal de radiocommunication est utilisé, ce dernier fonctionne en cours de session de communication selon le protocole WAP (mode de service courant).
Ainsi, un navigateur WAP sélectionné sur le terminal (manuellement ou dynamiquement en fonction du mode de service - ici le mode de service WAP) va formater directement et dynamiquement les informations multimédias reçues par le terminal, de façon à optimiser l'affichage et/ou la restitution de ces dernières sur l'écran du terminal.

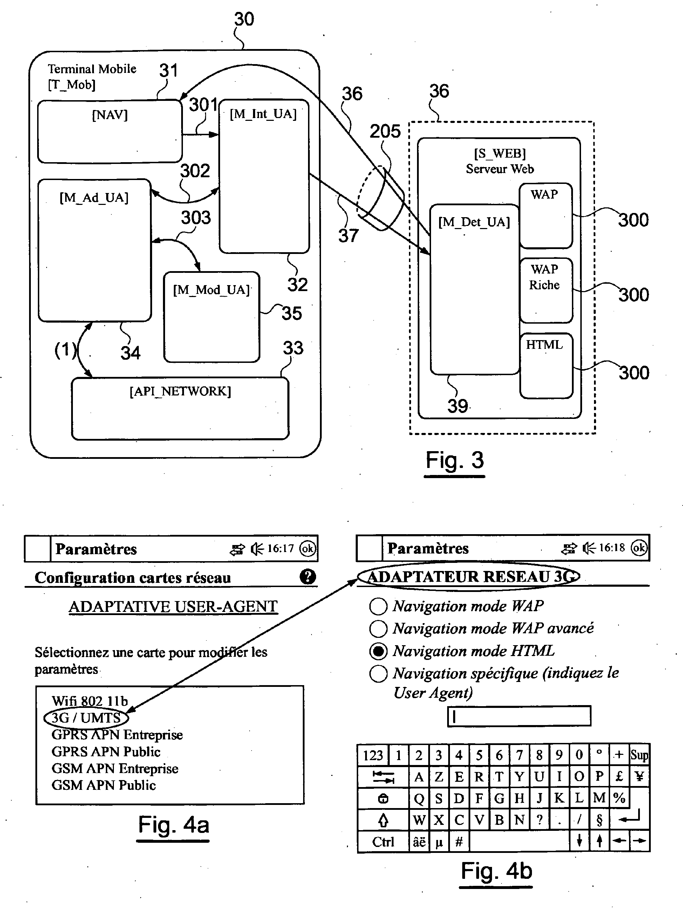

Préférentiellement, l'étape de sélection tient compte d'au moins un paramètre de configuration du terminal défini par l'utilisateur. Ce dernier peut en effet disposer d'une interface de configuration de son terminal, comme illustré sur les figures 4.a et 4.b, de façon à influencer le comportement et préciser le niveau de qualité de service requis par l'utilisateur, en fonction d'au moins un paramètre réseau, ou bien en fonction des services utilisés sur une période donnée - service vidéo par exemple, consommateur de bande passante.

Dans une variante de réalisation du procédé selon l'invention, l'étape de sélection tient compte de la valeur d'au moins un paramètre représentatif de la qualité de la connexion du terminal au réseau appartenant au groupe comprenant au moins :
- la bande passante dudit réseau ;
- la gigue dudit réseau ;
- le débit maximum dudit réseau ;
- le taux moyen d'erreur d'une liaison

Il est bien entendu que l'étape de sélection peut tenir compte simultanément ou bien de façon différenciée, d'au moins un paramètre de configuration et d'au moins un paramètre représentatif de la qualité de la connexion réseau.

De façon avantageuse, la valeur d'au moins un paramètre représentatif de la qualité de la connexion du terminal au réseau est détecté par le terminal ou est détecté par un autre terminal distant appartenant au groupe comprenant au moins :
- un serveur de contenus ;
- un serveur Web ;
- un terminal de supervision du trafic réseau.
   En effet, dans le cas d'un terminal de communication mobile, le passage d'un mode de réception 3G à un mode de réception GSM peut être initié à partir d'une information contenue soit dans une trame reçue par le terminal mobile, soit être directement détecté par le terminal mobile.

De façon préférentielle, le procédé selon l'invention comprend :
- en outre une étape de détection de la valeur courante d'au moins un des paramètres représentatifs de la qualité de la connexion du terminal au réseau ;
   l'étape de sélection d'une nouvelle valeur d'identifiant du mode de service souhaité étant adaptée à la valeur courante de l'un au moins des paramètres réseau détectés, lorsque la valeur d'identifiant du mode de service est différente de la valeur d'identifiant du mode de service actif.
   Cette sélection s'effectue dans une liste de modes de service pouvant être activés et utilisés par le terminal, la liste mettant en correspondance des plages de valeurs associées à au moins certains des paramètres réseau avec une valeur d'identifiant d'un mode de service adapté à ces dernières.
   La nouvelle valeur d'identifiant du mode de service sélectionné est alors intégrée dans le contenu de la requête à transmettre au serveur, à l'étape d'intégration.
   Il s'agit en effet de pouvoir adapter la réponse reçue du terminal suite à l'émission d'au moins certaines de ses requêtes à ladite nouvelle valeur d'identifiant sélectionnée.

Avantageusement, l'étape de sélection d'une nouvelle valeur d'identifiant du mode de service souhaité comprend une sous-étape de remplacement de la valeur d'identifiant d'interface de navigation courante du terminal par une nouvelle valeur d'interface de navigation adaptée à la nouvelle valeur d'identifiant du mode de service.

Pour la famille des applications Web, l'identifiant d'interface de navigation est représenté par le paramètre « User-agent ».
Il est cependant à préciser que cet identifiant du mode de service sera représenté par d'autres catégories de paramètres pour d'autres types de famille d'applications clientes embarquées nécessitant l'adaptation de leur comportement et/ou du niveau de qualité de service rendu, par exemple en fonction de la bande passante disponible à un instant donné sur le réseau de communication utilisé.

De façon préférentielle, la sous-étape de remplacement est une sous-étape de remplacement dans la base de registre du terminal de la valeur d'identifiant d'interface de navigation courante par la nouvelle valeur d'identifiant d'interface de navigation.
On précisera ici que le procédé selon l'invention ne s'applique pas uniquement aux terminaux disposant de plusieurs types d'interfaces de navigation et/ou de communication, lesquelles peuvent être activées en fonction de paramètres de configuration et/ou de disponibilité de la connexion réseau à un instant donné, mais également à des terminaux ne disposant que d'un seul type d'interface de navigation et/ou de communication. En effet, il est à considérer que suivant la position géographique du terminal à un instant donné, relativement à la localisation de la station avec laquelle le terminal communique, le signal reçu par le terminal pourra être plus ou moins dégradé, nécessitant ainsi le basculement du terminal d'un mode de service vers un autre mode de service plus adapté à la qualité du signal reçu.

Avantageusement, le procédé selon l'invention comporte une étape supplémentaire de redémarrage de l'interface de navigation dudit terminal de façon à activer la nouvelle valeur d'identifiant d'interface de navigation et à pouvoir intégrer cette dernière dans le contenu de la requête à transmettre au serveur.

Préférentiellement, l'étape d'intégration dans le contenu de la requête à transmettre, de la valeur d'identifiant du mode de service souhaité, est réalisée en temps réel par un module serveur embarqué sur le terminal, le module serveur ayant préalablement intercepté une requête, préalablement à la transmission de cette dernière par le terminal au serveur.
Ainsi, le format de la réponse du serveur au terminal est parfaitement adapté à la nouvelle valeur d'identifiant du mode de service souhaité.

Dans une variante de réalisation de l'invention, l'étape de sélection d'une nouvelle valeur d'identifiant du mode de service souhaité comprend avantageusement une sous-étape de prise en compte d'un ensemble de règles prédéfinies de modification définissant les modalités de remplacement de la valeur d'identifiant du mode de service courant par la nouvelle valeur d'identifiant du mode de service, en fonction d'au moins un paramètre d'utilisation de service préalablement défini par l'utilisateur du terminal.
En effet, suivant que l'utilisateur cherche à accéder à des contenus multimédia plus ou moins riches, celui-ci peut de son propre chef préciser au travers un interface de configuration de son terminal, quel type de service il désire recevoir ou exploiter, par exemple le service Wap, HTML allégé, HTML, par exemple en fonction de son propre jugement du rapport qualité d'affichage/ richesse du service qu'il lui sera possible d'obtenir pour un niveau donné de la disponibilité de la connexion réseau.

L'invention concerne également un dispositif de modification du mode de service demandé par un terminal de communication et/ou de diffusion, le terminal étant connecté à un réseau de communication à qualité de service variable et comprenant des moyens de transmission de requêtes auprès d'un serveur distant.

Un tel dispositif selon l'invention comprend avantageusement, au moins les moyens suivants :
- de sélection d'une nouvelle valeur d'identifiant du mode de service souhaité ;
   comprenant des moyens de remplacement de la valeur d'identifiant d'interface de navigation courante dudit terminal par une nouvelle valeur d'interface de navigation adaptée a ladite nouvelle valeur d'identifiant du mode de service;
- d'intégration dans le contenu de la requête à transmettre, de ladite valeur d'identifiant dudit mode de service souhaité.

Il s'agit en effet que les signaux requis par le terminal soient adaptés au format correspondant à la valeur d'identifiant contenue dans chaque requête du terminal.

Dans un mode de réalisation avantageux de l'invention, les moyens de sélection comprennent des moyens de prise en compte d'au moins un paramètre de configuration du terminal défini par l'utilisateur.

Dans une variante de l'invention, les moyens de sélection comprennent des moyens de prise en compte de la valeur d'au moins un paramètre représentatif de la qualité de la connexion du terminal au réseau , appartenant au groupe comprenant au moins :
- la bande passante dudit réseau ;
- la gigue dudit réseau ;
- le débit maximum dudit réseau ;
- le taux moyen d'erreur d'une liaison

Préférentiellement, le dispositif selon l'invention comprend en outre des moyens supplémentaires :
- de détection de la valeur courante d'au moins un des paramètres représentatifs de la qualité de la connexion du terminal au réseau ;
- de sélection d'une nouvelle valeur d'identifiant du mode de service souhaité adaptée à la valeur courante de l'un au moins des paramètres réseau détectés, lorsque la valeur d'identifiant du mode de service est différente de la valeur d'identifiant du mode de service actif. Cette sélection s'effectue dans une liste de modes de service pouvant être activés et utilisés par le terminal la liste mettant en correspondance des plages de valeurs associées à au moins certains des paramètres réseau avec une valeur d'identifiant d'un mode de service adapté à ces dernières ;
- d'intégration dans le contenu de la requête à transmettre au serveur, de la nouvelle valeur d'identifiant dudit mode de service sélectionné.
   de façon que la réponse reçue dudit terminal suite à l'émission d'au moins certaines de ses requêtes soit adaptée à ladite nouvelle valeur d'identifiant sélectionnée.

Préférentiellement, les moyens de sélection d'une nouvelle valeur d'identifiant du mode de service souhaité comprennent des moyens de remplacement de la valeur d'identifiant d'interface de navigation courante du terminal par une nouvelle valeur d'interface de navigation adaptée à la nouvelle valeur d'identifiant du mode de service.

De façon également préférentielle, les moyens de remplacement de la valeur d'identifiant d'interface sont des moyens de remplacement dans la base de registre du terminal de la valeur d'identifiant d'interface de navigation courante par la nouvelle valeur d'identifiant d'interface de navigation.

Il est à souligner que dans un tel mode de réalisation du dispositif de l'invention, un pré requis concerne l'interface de navigation du terminal utilisé, laquelle doit être capable, sans modification particulière, de recevoir aussi bien des données au format Wap, que des données au format HTML allégé, HTML, ou tous autres formats.

De façon avantageuse, le dispositif selon l'invention comprend en outre des moyens de configuration auto adaptatifs de la nouvelle valeur d'identifiant du mode de service souhaité en fonction de la valeur courante d'au moins un paramètre représentatif de la qualité de la connexion du terminal au réseau.

L'invention concerne également et de façon préférentielle un terminal de communication et/ou de diffusion comportant une pluralité de modes de service activables et/ou une pluralité d'interfaces de communication avec au moins un serveur de contenu, au travers d'un réseau de communication. Selon l'invention, un tel terminal met en oeuvre un dispositif de modification du mode de service courant, tel que précité.

L'invention concerne aussi un produit programme d'ordinateur téléchargeable depuis un réseau de communication et/ou enregistré sur un support lisible par ordinateur et/ou exécutable par un processeur comprenant des instructions de code de programme qui lorsqu'elles sont éxécutées par un ordinateur, réalisent les étapes du procédé précité de modification du mode de service demandé par un terminal de communication et/ou de diffusion, le terminal étant connecté à un réseau de communication à qualité de service variable.

Le procédé de modification du mode de service demandé par un terminal de communication et/ou de diffusion, tel que précité, s'applique avantageusement aux domaines appartenant au groupe comprenant au moins :
- la visiophonie ;
- le travail collaboratif assisté par ordinateur ;
- les applications communicantes embarquées ;
- les services de messagerie ;
- la télévision à la demande ;
- la vidéo à la demande.

On souligne ici que les procédé et dispositif de modification du mode de service demandé par un terminal de communication et/ou de diffusion selon l'invention, peuvent s'appliquer aisément à tout type de terminaux de communication et/ou de diffusion, y compris un terminal de communication apte à communiquer avec un réseau local, ou bien encore avec un terminal de diffusion mobile.
En effet, tout laisse à supposer qu'à l'avenir, de nouveaux terminaux de communication mobile, également compatibles avec les normes Wi-Fi, ou Bluethooth (marque déposée), ou encore DBV-T, subiront la même problématique d'adaptation du mode de service utilisé à un instant donné, en fonction des variations de qualité de connexion réseau et ou de la disponibilité de cette dernière dans une zone géographique particulière.

### 5. Liste des figures

D'autres caractéristiques et avantages de l'invention apparaîtront plus clairement à la lecture de la description suivante d'un mode de réalisation préférentiel de l'invention, donné à titre d'exemple illustratif et non limitatif, faite en référence aux dessins annexés parmi lesquels :
- la figure 1 déjà discutée relativement à l'art antérieur, illustre un exemple d'architecture distribuée dans laquelle un terminal mobile accède à un site Web hébergé par un serveur via un outil de multi publication;
- la figure 2 présente le principe général d'un premier mode de réalisation de l'invention impliquant une modification de la valeur d'identifiant d'une interface de navigation courante d'un terminal mobile, dans la base de registre de ce dernier ;
- la figure 3 illustre le principe général d'un deuxième mode de réalisation possible de l'invention, mettant en oeuvre une modification dynamique de la valeur d'identifiant d'interface de navigation dans l'entête des requêtes émises par un terminal mobile.
- les figures 4.a et 4.b illustrent respectivement des exemples d'interface de configuration de l'interface de navigation d'un terminal mobile à partir d'une liste d'interfaces de navigation pouvant être associées par un utilisateur à différentes interfaces réseau déclarées sur le terminal mobile ;

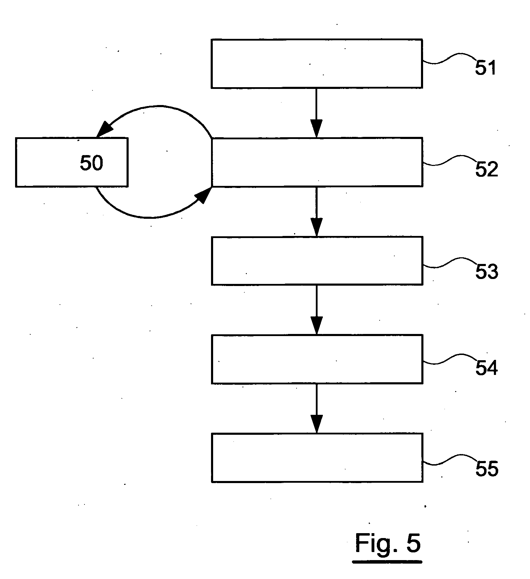

- la figure 5 donne un organigramme des grandes étapes du procédé d'adaptation automatique d'une interface de navigation d'un terminal de radiocommunication mobile, selon l'invention.

### 6. Description de l'invention

La présente invention concerne donc un procédé d'adaptation automatique d'une interface de navigation d'un terminal de radiocommunication mobile comportant plusieurs types d'interfaces de navigation, le terminal étant connecté à un serveur de contenus au moyen d'une connexion à un réseau de communication à qualité de service variable.

L'originalité du procédé selon cette invention réside essentiellement dans la façon d'offrir à l'utilisateur souhaitant accéder à Internet via son terminal mobile, une qualité de service accrue dans l'éventualité d'une indisponibilité du réseau à fort débit en émission et/ou en réception, par exemple le réseau 3G.

La technique selon l'invention repose sur une adaptation de la valeur d'identifiant de l'interface de navigation du terminal en fonction d'un niveau de bande passante disponible sur le réseau utilisé à un instant donné, préalablement à la transmission de chaque requête du terminal mobile à destination d'un serveur de contenus, de façon que ce dernier retourne au terminal un contenu multimédia qui soit parfaitement adapté à son interface de navigation courante, cette dernière étant elle-même parfaitement adaptée au niveau de disponibilité du réseau de communication utilisé.

L'identifiant d'interface de navigation est donc transmis au serveur de contenus en étant intégré à chaque requête émise par le terminal. Cet identifiant d'interface de navigation du terminal, communément appelé « User-Agent » est embarqué, de façon plus précise dans l'entête de chaque requête émise par le terminal mobile à destination du serveur de contenus.

D'autres paramètres, comme la version du système d'exploitation, la taille d'écran, etc. du terminal mobile peuvent aussi être embarqués dans l'entête de chaque requête.

Les sites Internet hébergés par un serveur de contenus disposent d'une pluralité de versions différentes des contenus qu'ils mettent à disposition des terminaux mobiles (site Internet multi publiés), de façon qu'ils puissent adapter les contenus renvoyés (langage de description, ergonomie, navigation, images, vidéos, audio, etc.) en réponse aux requêtes des terminaux mobiles , en fonction de la valeur du « User-agent » (UA), reçues de ces derniers.

L'invention se propose ainsi de donner la capacité à un terminal mobile, de pouvoir modifier son UA selon le type de connexion réseau dont il dispose et/ou en fonction de la disponibilité d'un tel réseau en termes de débits et/ou de bande passante à un instant donné, de façon que le terminal mobile puisse recevoir :
- des contenus légers, du type WAP textuel noir et blanc basique, par exemple, si ce dernier dispose d'une connexion bas débit du type GSM DATA ;
- des contenus plus riches, du type WAP incluant des images couleurs, feuilles de styles, etc., par exemple, s'il dispose d'une connexion moyen débit du type GPRS;
- des contenus fidèles à 100% au contenu du site de base (version HTML, par exemple) s'il dispose d'une connexion haut débit, par exemple du type 3G et/ou Wifi.

Plus précisément, l'invention consiste en l'introduction d'un module permettant de déterminer la connexion réseau la mieux adaptée.

Ce module, embarqué dans le terminal mobile, dispose de fonctionnalités de dialogue avec les APIs des couches basses du système d'exploitation du terminal.

Il fonctionne en tâche de fond, de façon à détecter à intervalles de temps réguliers la nature de la connexion réseau et la disponibilité du réseau en termes de bande passante et de débit à un instant donné et à modifier en conséquence la valeur d'identifiant d'interface de navigation utilisée par le terminal, l'objectif étant de sélectionner une interface de navigation courante qui soit la mieux adaptée pour naviguer dans le contenu multimédia d'un site hébergé sur un serveur de contenus.

Des règles intelligentes de management du UA seront connues du module à priori.

Deux mode de réalisation avantageux de l'invention sont envisageables.

Dans un premier mode de réalisation de l'invention, en fonction de la disponibilité du réseau utilisé, ou bien suite à un changement de connexion du terminal d'une première connexion réseau vers une deuxième connexion réseau de capacité différente, la valeur de l'identifiant de l'interface de navigation courante sera modifiée directement dans la base de registre du terminal mobile, de façon que cette nouvelle valeur d'identifiant soit celle qui sera intégrée dans l'entête des requêtes suivantes émises à destination d'un serveur.

Suivant le type de terminal mobile utilisé et suivant le système d'exploitation embarqué sur ce dernier, un redémarrage de l'interface de navigation courante sera nécessaire pour la prise en compte de la nouvelle valeur d'identifiant d'interface de navigation et pour l'activation de cette dernière sur le terminal mobile.

Dans un deuxième mode de réalisation de l'invention, un module serveur est embarqué sur le terminal mobile. Ce module serveur joue le rôle d'un « proxy » local dont le rôle consiste à intercepter toute requête émanent de l'interface de navigation courante, puis à intégrer une nouvelle valeur dynamique d'identifiant d'interface de « navigation (ou « user agent ») » dans les entêtes des requêtes qu'il doit rediriger vers un serveur donné, en remplacement de la valeur d'identifiant statique contenue dans la requête interceptée.

Ces deux modes de réalisation de l'invention sont détaillés ci-dessous.

### 6.1 Description du mode de réalisation par modification de la base de registre

Comme illustré sur la figure 2, ce premier mode de réalisation selon l'invention s'appuie sur la mise en oeuvre au niveau du terminal mobile d'un ensemble de composants collaborant les uns avec les autres, de façon à permettre une modification de la valeur statique d'identifiant d'interface de navigation courante (ou « User-agent »), directement à l'intérieur de la base (22) de registre du système d'exploitation du terminal (20) mobile.

Ces différents composants sont décrits ci-dessous pour un terminal (20) de communication mobile (dénommé, [T_Mob]), lequel dispose de plusieurs interfaces réseau, qu'il peut activer, par exemple du type GPRS, 3G, Wifi, etc., ces dernières étant gérées par un composant (23) de connexion aux APIs réseau du système d'exploitation.

Ce terminal (20) dispose donc d'un système d'exploitation et d'une interface (21) de navigation (dénommée [NAV] sur la figure) pour laquelle le « User-Agent » (ou indentifiant d'interface) est sauvegardé en base de registre.

Cette interface (21) permet par exemple au terminal (20) de pouvoir naviguer sur Internet. Il s'agit d'une application exécutée sur le terminal (20), compatible notamment mais non exclusivement avec les standards HTML / WAP 2.x et antérieurs.

A titre d'exemple d'une telle interface de navigation exécutée par un terminal mobile de radiocommunication, on peut citer le navigateur Windows Pocket Explorer (marques déposées) exécutable aussi bien sur un téléphone mobile, que sur un assistant personnel numérique (ou PDA), par exemple.

Le composant (22) représente la base de registre sur laquelle le système d'exploitation du terminal repose et l'ensemble des applications logicielles installées sur le terminal (20) mobile, tout comme le système d'exploitation y stockent les informations essentielles à leurs bons fonctionnements respectifs.

Parmi les différentes informations stockées dans la base de registre, celle qui intéresse l'invention est la valeur d'identifiant de l'interface de navigation exécutée par le terminal mobile. Cette valeur est définie par défaut de façon statique.

Un composant important mis en oeuvre par l'invention est le module (24) (dénommé [M_Ad_UA] sur la figure 2), dont le rôle consiste à modifier la valeur statique du « User-Agent » correspondant à l'identifiant d'interface de navigation, directement dans la base de registre du terminal (20), en fonction du niveau de disponibilité du réseau de communication utilisé à un instant donné et en cohérence avec un ensemble de règles (25) prédéfinies.

Ce module (24) d'adaptation de la valeur courante du « user-agent » collabore donc avec au moins deux autres modules importants du terminal :
- le module (23) dénommé [API_NETWORK] sur la figure 2, lequel a pour fonction d'interagir avec les couches de réseau de communication pouvant être accédées par le système d'exploitation, de façon à détecter quel est le réseau de communication utilisé à un instant donné par le terminal mobile, le basculement du terminal mobile depuis un premier réseau de communication vers un second lors du déplacement du terminal, puis, pour le réseau de communication effectivement utilisé par le terminal, son niveau de disponibilité en termes de bande passante et/ou de débit, éventuellement en fonction des types de données requises dans les requêtes du terminal transmise au serveur de contenus ; et
- le module (25) dénommé [M_Mod_UA] sur la figure 2, lequel a pour rôle de déterminer pour un niveau de disponibilité donné (bande passante disponible, gigue de la connexion, taux d'erreur, par exemple), détecté à un instant donné par le module (23), la valeur d'identifiant d'interface de navigation (ou « user-agent ») la plus adaptée que le module (24) d'adaptation du « user-agent » doit sauvegarder dans la base de registre du terminal mobile, de façon que cette dernière soit prise en compte dans toutes les entêtes des requêtes à destination du serveur de contenus.

Les règles (25) de modification précisent par quelle valeur et dans quelles circonstances le « User-Agent » doit être modifié.

Ces règles (25) de modification sont par exemple créées à l'initiative de l'utilisateur, au moment de l'installation du module (24) principal d'adaptation [M_Ad_UA].

On pourra proposer à l'utilisateur des choix quant au type de données (Wap / HTML) utilisées pour la navigation lorsque telle ou telle interface sera active. Ainsi, en fonctionnement le système modifiera automatiquement le UA en fonction du contexte.

L'intérêt d'une telle solution technique selon l'invention réside dans le fait qu'après chaque modification de la valeur d'identification de l'interface de navigation courante du terminal mobile, la nouvelle valeur d'identifiant courante sera prise en compte dans l'entête de chaque requête (26) émise par le terminal (20) à destination d'un terminal (28) serveur de contenu. Ce dernier (28) interprétera alors au moyen de son module (29) de détection de valeur de « user-agent » l'entête de la requête (26) du terminal pour en extraire la version (200) du contenu à renvoyer au terminal dans la réponse (27) à la requête (26).
De façon plus précise, le fonctionnement du module (24) [M_Ad_UA] est le suivant.

A chaque nouvelle demande de connexion DATA, ce module (24) interroge (201) le module (23) [API_NETWORK] afin de connaître le contexte réseau dans lequel se trouve le terminal (20). Ce dernier, par l'intermédiaire des APIs fournis par le système d'exploitation, renvoie (201) la liste des interfaces réseau présentes sur le terminal (20) et distingue celle qui est active.

Avec cette dernière information, le module (24) [M_Ad_UA] sollicite le module (25) [M_Mod_UA] contenant les règles de modification de l'identifiant d'interface de navigation, pour qu'il lui renvoie le « User-Agent » équivalent à la connexion réseau active.

A titre de simple exemple illustratif et non limitatif du type de règles (25) de modification, on peut citer :
○ pour une connexion moyen débit GSM / GPRS, une interface de navigation "EricssonT68/R101" pour une navigation du type WAP basique ; la valeur de l'identifiant qui est dans ce cas le « User-Agent » est "EricssonT68/R101" ;
○ pour une connexion haut débit Wifi / 3G, une interface de navigation « Mozilla/4.0 », pour une navigation WEB optimisée.

Une fois la nouvelle valeur d'identifiant remontée au module d'adaptation (24) [M_Ad_UA], l'ancienne valeur d'identifiant d'interface de navigation est remplacée en base de registre par la nouvelle valeur d'identifiant déterminée en fonction de la disponibilité du réseau utilisé et des règles de modification.

En termes de mise en oeuvre de la solution technique selon l'invention, et comme illustré sur les figures 4.a et 4.b, l'utilisateur dispose de moyens de configuration du module d'adaptation (24) [M_Ad_UA] de son terminal, de façon à pouvoir limiter au maximum les temps de téléchargement fastidieux lors de connexions à faibles débits.

Pour cela il renseigne au premier démarrage du logiciel ses préférences au travers desquelles il associe, par exemple sous la forme d'une table de correspondance, un ensemble de catégorie de connexions réseau exploitable par son terminal mobile, GSM DATA, GPRS, 3G, Wifi, etc. par exemple, respectivement avec les formats contenus de données multimédia qu'il souhaite recevoir, Wap 1.0, Wap 2.0, xHTML, HTML 1.0, HTML 1.1, etc. par exemple.

Il pourra en outre rejouer ultérieurement cette phase de paramétrage et ainsi revenir ultérieurement sur les paramètres de configuration et les règles de modification de l'identifiant courant de l'interface de navigation.
Ainsi, par exemple, si la connexion DATA destinée à permettre la récupération de données, parfois riches du type multimédia, est :
1. du type GSM DATA alors on associe la valeur d'identifiant (« user-agent ») suivante : « EricssonT68/R101 » ;
2. du type GPRS DATA alors on associe la valeur d'identifiant (« user-agent ») suivante : « EricssonT610 » ;
3. du type Socle / 3G / Wifi alors alors on associe la valeur d'identifiant (« user-agent ») suivante : « Mozilla/4.0 ».

Le module (24) d'adaptation de l'identifiant courant du « user-agent » fonctionne en permanence, il est exécuté en tâche de fond sur le terminal mobile, de façon qu'il puisse détecter rapidement un changement de localisation de l'utilisateur et de son terminal mobile activé, par exemple un passage d'une zone couverte par un réseau de communication du type 3G, vers une zone couverte par un réseau du type GPRS.

Un cas d'usage simple et illustratif de ce premier mode de réalisation de l'invention, peut correspondre à un utilisateur voyageant en train et passant à proximité d'une grande ville couverte en UMTS alors que le reste de son trajet est couvert en GPRS.

Dans un tel scénario, l'utilisateur souhaite naviguer sur Internet et démarre le navigateur de son terminal mobile, avant de saisir, sous la forme d'une URL, l'adresse du site Internet dans lequel il souhaite rechercher de l'information.

On imagine ici que la meilleure connexion activable au moment où l'utilisateur transmet sa requête d'établissement d'une connexion avec le serveur de contenu distant est une connexion 3G, laquelle est déterminée par le système d'exploitation, après détection du type de réseau de communication accessible à cet instant.

Le module (24) [M_Ad_UA] du terminal (20) interroge (201) ensuite le module (23) [API_NETWORK] dans l'objectif de connaître l'adaptateur réseau utilisé à cet instant, le module (23) lui retournant une liste des interfaces réseau présentes sur le terminal - GSM DATA, GPRS, WIFI, 3G, par exemple - ainsi que l'interface de navigation courante active sur le terminal (20) mobile - l'interface de navigation sur réseau 3G, par exemple.

Le module d'adaptation (24) [M_Ad_UA] transmet ensuite au module (25) [M_Mod_UA] le type de connexion réseau disponible obtenue auprès du module APIs (23), le module (25) sélectionnant la valeur d'identifiant d'interface de navigation la plus adaptée à cette connexion réseau disponible, en interrogeant une table de correspondance définissant un ensemble de règles de modification.

Le module (24) [M_Ad_UA] qui interroge à intervalles de temps réguliers le module (23) de gestion des APIs réseau, puis le module (25) [M_Mod_UA], auprès duquel il obtint par exemple en retour (202) la valeur d'identifiant « Mozilla/4.0 » qu'il vient inscrire (203) en base de registre dans les propriétés du navigateur.

Le module (25) [M_Mod_UA] est donc sollicité par le module (24) [M_Ad_UA] pour obtenir la meilleure correspondance entre la chaîne de caractères définissant le type d'interface réseau et la valeur du « User-Agent » servant à déterminer la nouvelle interface de navigation à activer en cohérence avec la disponibilité du réseau détecté, par exemple :
- pour une connexion « GSM DATA », la valeur d'identifiant d'interface est du type « Nokia7250/1.0 (3.12), Profile/MIDP-1.0, Configuration/CLDC-1.0 (Google WAP Proxy/1.0) » ;
- pour une connexion « GPRS », la valeur d'identifiant d'interface du type « Mozilla/4.0 compatible; MSIE 4.01; Windows CE; PPC; 240x320) » ;
- pour une connexion « CRADDLE », une valeur d'identifiant d'interface du type « Mozilla/5.001 windows; U; NT4.0; Gecko/25250101 », par exemple.

Pendant ce temps le terminal (20) monte sa connexion DATA qui, dès qu'elle est active, permet au navigateur (21) de créer l'entête de la requête HTTP (26) avec les valeurs inscrites en base de registre qu'il sera venu chercher (204).

La requête (26) est alors analysée par le module (29) de détection de la valeur d'identifiant d'interface de navigation [M_Det_UA] du serveur de contenus (serveur Web) qui en extrait la valeur du UA et retourne (27) la version HTML (la plus riche et coûteuse en bande passante dans ce cas).

On imagine ensuite, dans cet exemple, qu'en cours de navigation sur Internet, l'utilisateur quitte la zone 3G à fort niveau de disponibilité en bande passante et/ou en débit, pour une zone GPRS offrant de plus faibles capacités réseau.

Comme précédemment, l'utilisateur souhaite continuer à naviguer sur Internet. Cette fois la connexion activable est la connexion GPRS DATA.

Le module (24) [M_Ad_UA] recherche le la nouvelle valeur d'identifiant d'interface du « user-agent » à inscrire en base de registre, en fonction du niveau de disponibilité du réseau GPRS DATA (par exemple la valeur suivante « EricssonT610 »), cette valeur d'identifiant d'interface devant être la mieux adaptée à un format de navigation Wap moins riche en termes de contenu multimédia, mais cohérente avec les contraintes de disponibilité du réseau de communication utilisé, à un instant donné

La nouvelle requête (26) vers le serveur Web contenant la nouvelle valeur d'identifiant de la nouvelle interface (21) de navigation courante active sur le terminal (20) mobile permet au module (29) de détection du « user-agent » coté serveur Web de renvoyer des contenus au format WAP mieux adaptés au débit de la couche transport disponible, et non plus des contenus au format HTML.

Suivant le type du terminal mobile utilisé, il peut s'avérer nécessaire de redémarrer l'interface de navigation courante, de façon que cette dernière s'adapte à la nouvelle valeur d'identifiant d'interface de navigation.

### 6.2 Description du mode de réalisation impliquant une modification dynamique de la valeur d'identifiant d'interface de navigation

Comme illustré sur la figure 3, ce deuxième mode de réalisation selon l'invention s'appuie sur la mise en oeuvre au niveau du terminal mobile d'un ensemble de composants collaborant les uns avec les autres, de façon à permettre une modification de la valeur statique d'identifiant d'interface de navigation courante (ou « User-agent »), mais sans passer par une modification de la valeur de l'identifiant d'interface de navigation du terminal (30) mobile.

Comme dans le cadre du premier mode de réalisation, on retrouve les composant (30) [T_Mob] représentant un terminal mobile disposant de plusieurs interfaces réseau, GPRS, 3G, Wifi, par exemple, d'un système d'exploitation et d'un navigateur dont la valeur du « User-Agent » courante est sauvegardée en base de registre du terminal (30).

Le module (34) d'adaptation [M_Ad_UA] interagit avec plusieurs éléments, dont le module (33) [API_NETWORK] qui interagit avec les couches réseau du système d'exploitation.

Le module (35) [M_Mod_UA] a toujours pour rôle de translater l'information concernant le type de transport réseau en une valeur de « User-Agent » adaptée.

Dans ce deuxième mode de réalisation avantageux de l'invention, un nouveau module (32) [M_mt_UA] d'interception des requêtes émises par l'interface de navigation du terminal (30) mobile est mise en oeuvre.

Il permet d'intercepter et de modifier dynamiquement, et non plus de façon statique, si nécessaire la valeur courante du « User-Agent » contenu dans les requêtes HTTP.

Ce module (32) écoute donc en continu les appels HTTP sortants émis sous forme de requêtes par l'interface de navigation courante. Lorsque le navigateur requête (36) un site Internet, il envoie une entête contenant les informations relatives au terminal et au navigateur, dont le « User-Agent ».

Ce module (32) remplace alors si besoin la valeur courante du « user-agent » contenue dans l'entête de chaque requête émise par l'interface (31) de navigation, avec une valeur qui lui aura été indiquée auparavant par [M_Ad_UA].

On précise ici le fonctionnement du module (34) [M_Ad_UA] d'adaptation de la valeur du « user-agent ».

Ce module (34) interroge le module (33) [API_NETWORK] afin de connaître le contexte réseau dans lequel se trouve le terminal (30). Le module (33), disposant de l'information par l'intermédiaire des APIs fournis par le système d'exploitation, renvoie au module 34 la liste des interfaces réseau présentes - GSM DATA, GRPS, 3G, WIFI - sur le terminal et identifie celle qui est active.

La connexion active est la connexion courante utilisée par le terminal, à un instant donné, dans un contexte donné (en fonction du/des réseaux disponibles), et qui permet aux applications d'accéder à internet.

Avec cette dernière information, le module (34) [M_Ad_UA] interroge (303) le module (35) [M_Mod_UA] pour qu'il lui renvoie (303) la valeur de « User-Agent » la mieux adaptée à la connexion réseau courante, par exemple :
- pour une connexion GSM, la valeur de l'interface destinée à une navigation au format WAP est « EricssonT68/R101 »;
- pour une connexion GPRS, une interface « EricssonT610 », autorisant notamment dans une navigation au format Wap « graphique » ;
- pour une connexion Wifi / 3G, une interface « Mozilla/4.0 » pour une navigation HTML plus riche.

Ensuite et une fois retournée au module (34) [M_Ad_UA], la nouvelle valeur du « User-Agent » est transmise (302) par ce dernier au module (32) [M_Int_UA] d'interception des requêtes qui, dès qu'une requête HTTP émanera du navigateur (31), l'interceptera et remplacera la valeur statique du UA contenue dans l'entête de la requête, par la nouvelle valeur dynamique de l'identifiant d'interface de navigation (ou « user-agent »).

A la différence du premier mode de réalisation de l'invention décrit au chapitre 6.1, dans ce deuxième mode de réalisation de l'invention, la valeur courante de l'identifiant d'interface de navigation peut être directement modifiée, de façon dynamique, sans qu'il soit nécessaire de la redémarrer, ce qui rend en outre l'architecture globale du terminal mobile parfaitement indépendante de la structure de la base de registre et donc du système d'exploitation.

## Revendications

1. Procédé de modification du mode de service demandé par un terminal (20) de communication et/ou de diffusion, ledit terminal (20) étant connecté à un réseau (205) de communication à qualité de service variable,
**caractérisé en ce que** ledit terminal (20) exécute préalablement à la transmission (26) d'au moins certaines de ses requêtes, au moins :
- une étape (52, 202) de sélection d'une nouvelle valeur d'identifiant du mode de service souhaité comprenant :
○ une sous-étape (53) de remplacement de la valeur d'identifiant d'interface de navigation courante dudit terminal (20) par une nouvelle valeur d'interface de navigation adaptée à ladite nouvelle valeur d'identifiant du mode de service ;
- une étape (54, 203) d'intégration dans le contenu de la requête à transmettre, de ladite valeur d'identifiant dudit mode de service souhaité ;
de façon que les signaux requis par ledit terminal (20) soient adaptés au format (200) correspondant à ladite valeur d'identifiant contenue dans ladite requête (26).

2. Procédé de modification du mode de service demandé par un terminal (20) de communication et/ou de diffusion, selon la revendication 1, **caractérisé en ce que** ladite étape (52, 202) de sélection tient compte d'au moins un paramètre de configuration dudit terminal (20) défini par l'utilisateur.

3. Procédé de modification du mode de service demandé par un terminal (20) de communication et/ou de diffusion, selon l'une quelconque des revendications 1 et 2, **caractérisé en ce que** ladite étape (52, 202) de sélection tient compte de la valeur d'au moins un paramètre représentatif de la qualité de la connexion dudit terminal (20) audit réseau (205), appartenant au groupe comprenant au moins :
- la bande passante dudit réseau (205) ;
- la gigue dudit réseau (205) ;
- le débit maximum dudit réseau (205) ;
- le taux moyen d'erreur d'une liaison (205).

4. Procédé de modification du mode de service demandé par un terminal (20) de communication et/ou de diffusion, selon la revendication 3, **caractérisé en ce que** ladite valeur d'au moins un paramètre représentatif de la qualité de la connexion dudit terminal (20) audit réseau (205) est détecté par ledit terminal (20) ou est détecté par un autre terminal distant appartenant au groupe comprenant au moins :
- un serveur de contenus ;
- un serveur Web ;
- un terminal de supervision du trafic réseau.

5. Procédé de modification du mode de service demandé par un terminal (20) de communication et/ou de diffusion, selon l'une quelconque des revendications 1 à 4, **caractérisé en ce qu'**il comprend:
- en outre une étape (51) de détection de la valeur courante d'au moins un desdits paramètres représentatifs de la qualité de la connexion dudit terminal (20) audit réseau (205) ;
et **en ce que** ladite étape (52, 202) de sélection d'une nouvelle valeur d'identifiant dudit mode de service souhaité est alors adaptée à ladite valeur courante dudit au moins un paramètre réseau (205) détectée, lorsque ladite valeur d'identifiant dudit mode de service est différente de la valeur d'identifiant du mode de service actif, dans une liste (25) de modes de service pouvant être activés et utilisés par ledit terminal (20), ladite liste mettant en correspondance des plages de valeurs associées à au moins certains desdits paramètres réseau avec une valeur d'identifiant d'un mode de service adapté à ces dernières,
ladite nouvelle valeur d'identifiant dudit mode de service sélectionné étant alors intégrée dans le contenu de la requête à transmettre audit serveur, à ladite étape (54, 203) d'intégration,
de façon que la réponse reçue dudit terminal (20) suite à l'émission d'au moins certaines de ses requêtes soit adaptée à ladite nouvelle valeur d'identifiant sélectionnée.

6. Procédé de modification du mode de service demandé par un terminal (20) de communication et/ou de diffusion, selon la revendication 5, **caractérisé en ce que** ladite sous-étape (53) de remplacement est une sous-étape de remplacement dans la base de registre dudit terminal (20) de ladite valeur d'identifiant d'interface de navigation courante par ladite nouvelle valeur d'identifiant d'interface de navigation.

7. Procédé de modification du mode de service demandé par un terminal (20) de communication et/ou de diffusion, selon l'un quelconque des revendications 5 et 6, **caractérisé en ce qu'**il comporte une étape (55) supplémentaire de redémarrage de l'interface de navigation dudit terminal (20), de façon à activer ladite nouvelle valeur d'identifiant d'interface de navigation et à pouvoir intégrer cette dernière dans le contenu de la requête à transmettre audit serveur.

8. Procédé de modification du mode de service demandé par un terminal (20) de communication et/ou de diffusion, selon l'une quelconque des revendications 1 à 7, **caractérisé en ce que** ladite étape (54, 203) d'intégration dans le contenu de la requête à transmettre, de ladite valeur d'identifiant dudit mode de service souhaité, est réalisée en temps réel par un module serveur embarqué sur ledit terminal, ledit module serveur ayant préalablement intercepté ladite au moins une requête, préalablement à la transmission de cette dernière par ledit terminal (20) audit serveur,
de façon que le format de la réponse dudit serveur audit terminal (20) soit adaptée à ladite nouvelle valeur d'identifiant du mode de service souhaité.

9. Procédé de modification du mode de service demandé par un terminal (20) de communication et/ou de diffusion, selon l'une quelconque des revendications 1 à 8, **caractérisé en ce que** ladite étape (52, 202) de sélection d'une nouvelle valeur d'identifiant du mode de service souhaité comprend une sous-étape (50) de prise en compte d'un ensemble de règles prédéfinies de modification définissant les modalités de remplacement de ladite valeur d'identifiant du mode de service courant par ladite nouvelle valeur d'identifiant du mode de service, en fonction d'au moins un paramètre d'utilisation de service préalablement défini par l'utilisateur dudit terminal.

10. Dispositif de modification du mode de service demandé par un terminal (20) de communication et/ou de diffusion, ledit terminal (20) étant connecté à un réseau (205) de communication à qualité de service variable et comprenant des moyens de transmission (26) de requêtes auprès d'un serveur distant,
**caractérisé en ce que** ledit dispositif (20) comprend en outre au moins les moyens suivants :
- de sélection (202) d'une nouvelle valeur d'identifiant du mode de service souhaité comprenant :
○ des moyens (53) de remplacement de la valeur d'identifiant d'interface de navigation courante dudit terminal (20) par une nouvelle valeur d'interface de navigation adaptée à ladite nouvelle valeur d'identifiant du mode de service ;
- d'intégration (203) dans le contenu de la requête à transmettre, de ladite valeur d'identifiant dudit mode de service souhaité ;
de façon que les signaux requis par ledit terminal (20) soient adaptés au format (200) correspondant à ladite valeur d'identifiant contenue dans chaque requête (26) dudit terminal (20).

11. Dispositif de modification du mode de service demandé par un terminal (20) de communication et/ou de diffusion, selon la revendication 10, **caractérisé en ce que** lesdits moyens de sélection (202) comprennent des moyens de prise en compte d'au moins un paramètre de configuration dudit terminal (20) défini par l'utilisateur.

12. Dispositif de modification du mode de service demandé par un terminal (20) de communication et/ou de diffusion, selon l'une quelconque des revendications 10 et 11, **caractérisé en ce que** lesdits moyens de sélection (202) comprennent des moyens de prise en compte de la valeur d'au moins un paramètre représentatif de la qualité de la connexion dudit terminal (20) audit réseau (205), appartenant au groupe comprenant au moins :
- la bande passante dudit réseau (205) ;
- la gigue dudit réseau (205) ;
- le débit maximum dudit réseau (205) ;
- le taux moyen d'erreur d'une liaison (205).

13. Dispositif de modification du mode de service demandé par un terminal (20) de communication et/ou de diffusion, selon l'une quelconque des revendications 10 à 12, **caractérisé en ce qu'**il comprend en outre des moyens supplémentaires :
- de détection de la valeur courante d'au moins un desdits paramètres représentatifs de la qualité de la connexion dudit terminal (20) audit réseau (205) ;
- de sélection (202) d'une nouvelle valeur d'identifiant dudit mode de service souhaité adaptée à ladite valeur courante dudit au moins un paramètre réseau (205) détectée, lorsque ladite valeur d'identifiant dudit mode de service est différente de la valeur d'identifiant du mode de service actif, dans une liste (25) de modes de service pouvant être activés et utilisés par ledit terminal (20), ladite liste mettant en correspondance des plages de valeurs associées à au moins certains desdits paramètres réseau avec une valeur d'identifiant d'un mode de service adapté à ces dernières ;
- d'intégration (203) dans le contenu de la requête à transmettre audit serveur, de la nouvelle valeur d'identifiant dudit mode de service sélectionné.
de façon que la réponse reçue dudit terminal (20) suite à l'émission d'au moins certaines de ses requêtes soit adaptée à ladite nouvelle valeur d'identifiant sélectionnée.

14. Dispositif de modification du mode de service demandé par un terminal (20) de communication et/ou de diffusion, selon la revendication 13, **caractérisé en ce que** lesdits moyens de remplacement de ladite valeur d'identifiant d'interface sont des moyens de remplacement dans la base de registre dudit terminal (20) de ladite valeur d'identifiant d'interface de navigation courante par ladite nouvelle valeur d'identifiant d'interface de navigation.

15. Dispositif de modification du mode de service demandé par un terminal (20) de communication et/ou de diffusion, selon l'une quelconque des revendications 10 à 14, **caractérisé en ce qu'**il comprend en outre des moyens de configuration auto adaptatifs de ladite nouvelle valeur d'identifiant du mode de service souhaité en fonction de la valeur courante d'au moins un paramètre représentatif de la qualité de la connexion dudit terminal (20) audit réseau (205)..

16. Terminal (20) de communication et/ou de diffusion comportant une pluralité de modes de service activables et/ou une pluralité d'interfaces de communication avec au moins un serveur de contenu, au travers d'un réseau de communication comprenant, un dispositif de modification du mode de service courant selon l'une quelconque des revendications 10 à 15,

17. Produit programme d'ordinateur téléchargeable depuis un réseau de communication et/ou enregistré sur un support lisible par ordinateur et/ou exécutable par un processeur comprenant des instructions de code de programme qui lorsqu'elles sont éxécutées par un ordinateur realisent les étapes du procédé de modification selon l'une quelconque des revendications 1 à 9.

18. Procédé de modification du mode de service demandé par un terminal (20) de communication et/ou de diffusion selon les revendication 1 à 9 **caractérisé en ce qu'**il est mis en oeuvre aux domaines appartenant au groupe comprenant au moins :
- la visiophonie ;
- le travail collaboratif assisté par ordinateur ;
- les applications communicantes embarquées ;
- les services de messagerie ;
- la télévision à la demande ;
- la vidéo à la demande.

## Claims

1. Method for modifying a service mode requested by a communication and/or broadcast terminal (20), said terminal (20) being connected to a communication network (205) with variable service quality,
wherein that said terminal (20) executes, prior to the transmission (26) of at least some of its requests, at least:
- a step (52, 202) for selecting a new identifier value for the desired service mode comprising:
○ a substep (53) for replacing the current navigation interface identifier value of said terminal (20) with a new navigation interface value suited to said new service mode identifier value;
- a step (54, 203) for integrating, into the content of the request to be transmitted, said identifier value of said desired service mode;
so that the signals required by said terminal (20) are suited to the format (200) corresponding to said identifier value contained in said request (26).

2. Method for modifying a service mode requested by a communication and/or broadcast terminal (20), according to Claim 1, wherein in that said selection step (52, 202) takes account of at least one configuration parameter of said terminal (20) defined by the user.

3. Method for modifying a service mode requested by a communication and/or broadcast terminal (20), according to either of claims 1 or 2, wherein in that said selection step (52, 202) takes account of the value of at least one parameter representative of the quality of the connection of said terminal (20) to said network (205), belonging to the group comprising at least:
- the bandwidth of said network (205);
- the jitter of said network (205);
- the maximum bit rate of said network (205);
- the mean error ratio of a link (205).

4. Method for modifying a service mode requested by a communication and/or broadcast terminal (20), according to claim 3, wherein in that said value of at least one parameter representative of the quality of the connection of said terminal (20) to said network (205) is detected by said terminal (20) or is detected by another remote terminal belonging to the group comprising at least:
- a content server;
- a web server;
- a network traffic supervision terminal.

5. Method for modifying a service mode requested by a communication and/or broadcast terminal (20), according to any one of Claims 1 to 4, wherein in that it comprises:
- in addition, a step (51) for detecting the current value of at least one of said parameters representative of the quality of the connection of said terminal (20) to said network (205); and in that said step (52, 202) for selecting a new identifier value for said desired service mode is then suited to said current value of said at least one network parameter (205) detected, when said identifier value of said service mode is different from the identifier value of the active service mode, in a list (25) of service modes that can be activated and used by said terminal (20), said list correlating ranges of values associated with at least some of said network parameters with an identifier value of a service mode suited to the latter,
said new identifier value of said selected service mode then being integrated into the content of the request to be transmitted to said server, in said integration step (54, 203),
so that the response received from said terminal (20) following the transmission of at least some of its requests is suited to said new selected identifier value.

6. Method for modifying a service mode requested by a communication and/or broadcast terminal (20), according to claim 5, wherein in that said replacement substep (53) is a substep for replacing in the registry database of said terminal (20) said current navigation interface identifier value with said new navigation interface identifier value.

7. Method for modifying a service mode requested by a communication and/or broadcast terminal (20), according to either of claims 5 or 6, wherein in that it comprises an additional step (55) for restarting the navigation interface of said terminal (20), so as to activate said new navigation interface identifier value and be able to integrate the latter into the content of the request to be transmitted to said server.

8. Method for modifying a service mode requested by a communication and/or broadcast terminal (20), according to any one of claims 1 to 7, wherein in that said step (54, 203) for integrating into the content of the request to be transmitted said identifier value of said desired service mode is performed in real time by a server module embedded on said terminal, said server module having previously intercepted said at least one request, prior to the transmission of the latter by said terminal (20) to said server,
so that the format of the response from said server to said terminal (20) is suited to said new desired service mode identifier value.

9. Method for modifying a service mode requested by a communication and/or broadcast terminal (20), according to any one of claims 1 to 8, wherein in that said step (52, 202) for selecting a new desired service mode identifier value comprises a substep (50) for taking into account a set of predefined modification rules defining the modalities for replacing said current service mode identifier value with said new service mode identifier value, according to at least one service usage parameter previously defined by the user of said terminal.

10. Device for modifying a service mode requested by a communication and/or broadcast terminal (20), said terminal (20) being connected to a communication network (205) with variable service quality and comprising means (26) of transmitting requests to a remote server,
wherein in that said device (20) also comprises at least the following means:
- for selecting (202) a new identifier value for the desired service mode comprising:
o means (53) for replacing the current navigation interface identifier value of said terminal (20) with a new navigation interface value suited to said new service mode identifier value;
- for integrating (203) into the content of the request to be transmitted said identifier value of said desired service mode;
so that the signals required by said terminal (20) are suited to the format (200) corresponding to said identifier value contained in each request (26) from said terminal (20).

11. Device for modifying a service mode requested by a communication and/or broadcast terminal (20), according to claim 10, wherein that said selection means (202) comprise means for taking into account at least one configuration parameter of said terminal (20) defined by the user.

12. Device for modifying a service mode requested by a communication and/or broadcast terminal (20), according to either of claims 10 or 11, wherein that said selection means (202) comprise means of taking into account the value of at least one parameter representative of the quality of the connection of said terminal (20) to said network (205), belonging to the group comprising at least:
- the bandwidth of said network (205);
- the jitter of said network (205);
- the maximum bit rate of said network (205);
- the mean error ratio of a link (205).

13. Device for modifying a service mode requested by a communication and/or broadcast terminal (20), according to any one of claims 10 to 12, wherein in it also comprises additional means for:
- detecting the current value of at least one of said parameters representative of the quality of the connection of said terminal (20) to said network (205);
- selecting (202) a new identifier value for said desired service mode suited to said current value of said at least one network parameter (205) detected, when said identifier value of said service mode is different from the identifier value of the active service mode, in a list (25) of service modes that can be activated and used by said terminal (20), said list correlating ranges of values associated with at least some of said network parameters with an identifier value of a service mode suited to the latter;
- integrating (203) into the content of the request to be transmitted to said server the new identifier value of said selected service mode,
so that the response received from said terminal (20) following the transmission of at least some of its requests is suited to said new selected identifier value.

14. Device for modifying a service mode requested by a communication and/or broadcast terminal (20), according to claim 13, wherein in that said means of replacing said interface identifier value are means of replacing in the registry database of said terminal (20) said current navigation interface identifier value with said new navigation interface identifier value.

15. Device for modifying the service mode requested by a communication and/or broadcast terminal (20), according to any one of claims 10 to 14, wherein in it also comprises self-adaptive means of configuring said new identifier value of the desired service mode according to the current value of at least one parameter representative of the quality of the connection of said terminal (20) to said network (205).

16. Communication and/or broadcast terminal (20) comprising a plurality of service modes that can be activated and/or a plurality of communication interfaces with at least one content server, via a communication network, comprising a device for modifying the current service mode according to any one of Claims 10 to 15.

17. Computer program product that can be downloaded from a communication network and/or stored on a medium that can be read by a computer and/or executed by a processor comprising program code instructions, which, when executed by a computer, perform the steps of the modification method according to any one of Claims 1 to 9.

18. Method of modifying the service mode requested by a communication and/or broadcast terminal (20) according to Claims 1 to 9, wherein in that it is implemented in the fields belonging to the group comprising at least:
- videophonie;
- computer-assisted co-operative working;
- embedded communicating applications;
- messaging services;
- television on demand;
- video on demand.

## Patentansprüche

1. Verfahren zur Änderung des von einem Kommunikations- und/oder Verbreitungs-Endgerät (20) angeforderten Dienstmodus, wobei das Endgerät (20) mit einem Kommunikationsnetz (205) mit variabler Dienstqualität verbunden ist,
**dadurch gekennzeichnet, dass** das Endgerät (20) vor der Übertragung (26) mindestens bestimmter seiner Abfragen mindestens ausführt:
- einen Schritt (52, 202) der Auswahl eines neuen Kennungswerts des gewünschten Dienstmodus, der enthält:
○ einen Teilschritt (53) des Ersetzens des laufenden Navigationsschnittstellen-Kennungswerts des Endgeräts (20) durch einen neuen Navigationsschnittstellenwert, der an den neuen Kennungswert des Dienstmodus angepasst ist;
- einen Schritt (54, 203) der Integration des Kennungswerts des gewünschten Dienstmodus in den Inhalt der zu übertragenden Abfrage;
damit die von dem Endgerät (20) geforderten Signale an das Format (200) angepasst werden, das dem in der Abfrage (26) enthaltenen Kennungswert entspricht.

2. Verfahren zur Veränderung des von einem Kommunikations- und/oder Verbreitungs-Endgerät (20) angeforderten Dienstmodus nach Anspruch 1, **dadurch gekennzeichnet, dass** der Auswahlschritt (52, 202) mindestens einen vom Benutzer definierten Konfigurationsparameter des Endgeräts (20) berücksichtigt.

3. Verfahren zur Veränderung des von einem Kommunikations- und/oder Verbreitungs-Endgerät (20) angeforderten Dienstmodus nach einem der Ansprüche 1 und 2, **dadurch gekennzeichnet, dass** der Auswahlschritt (52, 202) den Wert mindestens eines für die Verbindungsqualität des Endgeräts (20) mit dem Netz (205) repräsentativen Parameters berücksichtigt, der zu der Gruppe gehört, die mindestens enthält:
- die Bandbreite des Netzes (205);
- den Jitter des Netzes (205);
- den maximalen Durchsatz des Netzes (205);
- die mittlere Fehlerrate einer Verbindung (205).

4. Verfahren zur Veränderung des von einem Kommunikations- und/oder Verbreitungs-Endgerät (20) angeforderten Dienstmodus nach Anspruch 3, **dadurch gekennzeichnet, dass** der Wert mindestens eines für die Qualität der Verbindung des Endgeräts (20) mit dem Netz (205) repräsentativen Parameters vom Endgerät (20) oder von einem anderen, fernen Endgerät erfasst wird, das zu der Gruppe gehört, die mindestens enthält:
- einen Inhaltsserver;
- einen Internetserver;
- ein Überwachungs-Endgerät des Netzverkehrs.

5. Verfahren zur Veränderung des von einem Kommunikations- und/oder Verbreitungs-Endgerät (20) angeforderten Dienstmodus nach einem der Ansprüche 1 bis 4, **dadurch gekennzeichnet, dass** es enthält:
- außerdem einen Schritt (51) der Erfassung des laufenden Werts mindestens eines der für die Qualität der Verbindung des Endgeräts (20) mit dem Netz (205) repräsentativen Parameter;
und dass der Schritt (52, 202) der Auswahl eines neuen Kennungswerts des gewünschten Dienstmodus dann an den laufenden Wert des mindestens einen erfassten Netzparameters (205) angepasst wird, wenn der Kennungswert des Dienstmodus sich vom Kennungswert des aktiven Dienstmodus unterscheidet, in einer Liste (25) von Dienstmodi, die von dem Endgerät (20) aktiviert und verwendet werden können, wobei die Liste mindestens bestimmten Netzparametern zugeordnete Wertbereiche mit einem Kennungswert eines an diese letzteren angepassten Dienstmodus in Übereinstimmung bringt,
wobei der neue Kennungswert des ausgewählten Dienstmodus dann in den Inhalt der an den Server zu übertragenden Abfrage im Integrationsschritt (54, 203) integriert wird,
damit die vom Endgerät (20) nach dem Senden mindestens bestimmter seiner Abfragen empfangene Antwort an den neuen ausgewählten Kennungswert angepasst wird.

6. Verfahren zur Veränderung des von einem Kommunikations- und/oder Verbreitungs-Endgerät (20) angeforderten Dienstmodus nach Anspruch 5, **dadurch gekennzeichnet, dass** der Teilschritt (53) des Ersetzens ein Teilschritt des Ersetzens des laufenden Navigationsschnittstellen-Kennungswerts durch den neuen Navigationsschnittstellen-Kennungswert im Basisregister des Endgeräts (20) ist.

7. Verfahren zur Veränderung des von einem Kommunikations- und/oder Verbreitungs-Endgerät (20) angeforderten Dienstmodus nach einem der Ansprüche 5 und 6, **dadurch gekennzeichnet, dass** es einen zusätzlichen Schritt (55) des Neustarts der Navigationsschnittstelle des Endgeräts (20) aufweist, um den neuen Navigationsschnittstellen-Kennungswert zu aktivieren und letzteren in den Inhalt der an den Server zu übertragenden Abfrage integrieren zu können.

8. Verfahren zur Veränderung des von einem Kommunikations- und/oder Verbreitungs-Endgerät (20) angeforderten Dienstmodus nach einem der Ansprüche 1 bis 7, **dadurch gekennzeichnet, dass** der Schritt (54, 203) der Integration des Kennungswerts des gewünschten Dienstmodus in den Inhalt der zu übertragenden Abfrage in Echtzeit von einem im Endgerät befindlichen Servermodul durchgeführt wird, wobei das Servermodul vorher die mindestens eine Abfrage vor der Übertragung dieser letzteren durch das Endgerät (20) an den Server aufgefangen hat,
damit das Format der Antwort des Servers an das Endgerät (20) an den neuen Kennungswert des gewünschten Dienstmodus angepasst wird.

9. Verfahren zur Veränderung des von einem Kommunikations- und/oder Verbreitungs-Endgerät (20) angeforderten Dienstmodus nach einem der Ansprüche 1 bis 8, **dadurch gekennzeichnet, dass** der Schritt (52, 202) der Auswahl eines neuen Kennungswerts des gewünschten Dienstmodus einen Teilschritt (50) der Berücksichtigung einer Gruppe von vordefinierten Änderungsregeln enthält, die die Modalitäten des Ersetzens des Kennungswerts des laufenden Dienstmodus durch den neuen Kennungswert des Dienstmodus in Abhängigkeit von mindestens einem Dienstnutzungsparameter definieren, der vorher vom Benutzer des Endgeräts definiert wird.

10. Vorrichtung zur Änderung des von einem Kommunikations- und/oder Verbreitungs-Endgerät (20) angeforderten Dienstmodus, wobei das Endgerät (20) mit einem Kommunikationsnetz (205) mit variabler Dienstqualität verbunden ist und Einrichtungen zur Übertragung (26) von Abfragen an einen fernen Server enthält,
**dadurch gekennzeichnet, dass** die Vorrichtung (20) außerdem mindestens die folgenden Einrichtungen enthält:
- eine Einrichtung zur Auswahl (202) eines neuen Kennungswerts des gewünschten Dienstmodus, die enthält:
o Einrichtungen (53) zum Ersetzen des laufenden Navigationsschnittstellen-Kennungswerts des Endgeräts (20) durch einen neuen Navigationsschnittstellenwert, der an den neuen Kennungswert des Dienstmodus angepasst ist;
- eine Einrichtung zur Integration (203) des Kennungswerts des gewünschten Dienstmodus in den Inhalt der zu übertragenden Abfrage;
damit die vom Endgerät (20) geforderten Signale an das Format (200) angepasst werden, das dem in jeder Abfrage (26) des Endgeräts (20) enthaltenen Kennungswert entspricht.

11. Vorrichtung zur Änderung des von einem Kommunikations- und/oder Verbreitungs-Endgerät (20) angeforderten Dienstmodus nach Anspruch 10, **dadurch gekennzeichnet, dass** die Auswahleinrichtungen (202) Einrichtungen zur Berücksichtigung mindestens eines Konfigurationsparameters des Endgeräts (20) enthalten, der vom Benutzer definiert wird.

12. Vorrichtung zur Änderung des von einem Kommunikations- und/oder Verbreitungs-Endgerät (20) angeforderten Dienstmodus nach einem der Ansprüche 10 und 11, **dadurch gekennzeichnet, dass** die Auswahleinrichtungen (202) Einrichtungen zur Berücksichtigung des Werts mindestens eines für die Qualität der Verbindung des Endgeräts (20) mit dem Netz (205) repräsentativen Parameters enthalten, der zu der Gruppe gehört, die mindestens enthält:
- die Bandbreite des Netzes (205);
- den Jitter des Netzes (205);
- den maximalen Durchsatz des Netzes (205);
- die mittlere Fehlerrate einer Verbindung (205).

13. Vorrichtung zur Änderung des von einem Kommunikations- und/oder Verbreitungs-Endgerät (20) angeforderten Dienstmodus nach einem der Ansprüche 10 bis 12, **dadurch gekennzeichnet, dass** sie außerdem zusätzliche Einrichtungen enthält:
- eine Einrichtung zur Erfassung des laufenden Werts mindestens eines der für die Qualität der Verbindung des Endgeräts (20) mit dem Netz (205) repräsentativen Parameter;
- eine Einrichtung zur Auswahl (202) eines neuen Kennungswerts des gewünschten Dienstmodus, der an den erfassten laufenden Wert des mindestens einen Netzparameters (205) angepasst ist, wenn der Kennungswert des Dienstmodus sich von dem Kennungswert des aktiven Dienstmodus unterscheidet, in einer Liste (25) von Dienstmodi, die von dem Endgerät (20) aktiviert und verwendet werden können, wobei die Liste mindestens bestimmten Netzparametern zugeordnete Wertbereiche mit einem Kennungswert eines an diese letzteren angepassten Dienstmodus in Übereinstimmung bringt;
- eine Einrichtung zur Integration (203) des neuen Kennungswerts des ausgewählten Dienstmodus in den Inhalt der an den Server zu übertragenden Abfrage,
damit die von dem Endgerät (20) nach dem Senden mindestens bestimmter seiner Abfragen empfangene Antwort an den neuen ausgewählten Kennungswert angepasst wird.

14. Vorrichtung zur Änderung des von einem Kommunikations- und/oder Verbreitungs-Endgerät (20) angeforderten Dienstmodus nach Anspruch 13, **dadurch gekennzeichnet, dass** die Einrichtungen zum Ersetzen des Schnittstellenkennungswerts Einrichtungen zum Ersetzen des laufenden Navigationsschnittstellen-Kennungswerts durch den neuen Navigationsschnittstellen-Kennungswert im Basisregister des Endgeräts (20) sind.

15. Vorrichtung zur Änderung des von einem Kommunikations- und/oder Verbreitungs-Endgerät (20) angeforderten Dienstmodus nach einem der Ansprüche 10 bis 14, **dadurch gekennzeichnet, dass** sie außerdem selbstanpassende Konfigurationseinrichtungen des neuen Kennungswerts des gewünschten Dienstmodus in Abhängigkeit vom laufenden Wert mindestens eines für die Qualität der Verbindung des Endgeräts (20) mit dem Netz (205) repräsentativen Parameters enthält.

16. Kommunikations- und/oder Verbreitungs-Endgerät (20), das mehrere aktivierbare Dienstmodi und/oder mehrere Kommunikationsschnittstellen mit mindestens einem Inhaltsserver über ein Kommunikationsnetz aufweist, das eine Vorrichtung zur Änderung des laufenden Dienstmodus nach einem der Ansprüche 10 bis 15 enthält.

17. Computerprogrammprodukt, das von einem Kommunikationsnetz herunterladbar und/oder auf einem computerlesbaren Träger gespeichert und/oder von einem Prozessor ausführbar ist, das Programmcodeanweisungen enthält, die, wenn sie von einem Computer ausgeführt werden, die Schritte des Änderungsverfahrens nach einem der Ansprüche 1 bis 9 ausführen.

18. Verfahren zur Änderung des von einem Kommunikations- und/oder Verbreitungs-Endgerät (20) nach einem der Ansprüche 1 bis 9 angeforderten Dienstmodus**, dadurch gekennzeichnet, dass** es in den Bereichen angewendet wird, die zu der Gruppe gehören, die mindestens enthält:
- die Bildtelefonie;
- die computergestützte Gruppenarbeit;
- die eingebauten verbundenen Anwendungen;
- die Mitteilungsverbreitungsdienste;
- das Fernsehen auf Abruf;
- das Video auf Abruf.
